# EUROPEAN PATENT SPECIFICATION

(11) **EP 1 569 391 B1**
(45) Date of publication and mention of the grant of the patent: **01.08.2007**
(21) Application number: 04026564.7
(22) Date of filing: 09.11.2004
(51) Int. Cl.: H04L 12/56

(54) **Electronic device and device discovery method using the same**
Elektronisches Gerät und Gerätentdeckungsverfahren mit Verwendung desselben
Dispositif électronique et procédé permettant de découvrir un appareil en utilisant ledit dispositif

(30) Priority: 26.02.2004 JP 2004051783
(43) Date of publication of application: 31.08.2005
(73) Proprietor: KABUSHIKI KAISHA TOSHIBA, Tokyo 105-8001 (JP)
(72) Inventor: Kusubashi, Takashi, Minato-ku Tokyo 105-8001 (JP)
(74) Representative: Henkel, Feiler & Hänzel

(56) References cited:
- US-A1- 2002 065 868
- US-A1- 2002 174 269
- US-B1- 6 631 271
- "Specification of the Bluetooth Sytem, Part E, Service Discovery Protocol (SDP)" BLUETOOTH, 1 December 1999 (1999-12-01), XP002245657

## Description

The present invention relates to an electronic device having a wireless communication function and a device discovery method using the electronic device.

An example of a short-distance wireless communication interface standard applied to portable electronic devices is Bluetooth™, details thereof are disclosed in e.g. "Specification of the Bluetooth Sytem, Part E, Service, Discovery Protocol (SDP)" BLUETOOTH, 1 December 1999, (1999-12-01), XP002245657.. This communication interface requires an operation of selecting a target device as a communication partner from a plurality of devices present within a predetermined wireless communication area. A device address (MAC address) that uniquely identifies a device can be input directly to select a target device, but input of such a six-byte address is troublesome. In general, devices present within a communicable area are discovered by an inquiry, a list of addresses or device names is displayed as the discovery results, and a target device is selected from the list.

In device discovery, a target device must be turned on. Continuous discovery may be possible depending on the type or settings of the device, or may not be possible in a case in which, for example, discoverability has been disabled. In the latter case, the device must be set in the general discoverable mode in advance by, for example, the user enabling discoverability in accordance with predetermined procedures for each device.

Whether the device can be discovered or not is determined by, in addition to the power-on/off state and the setting of the general discoverable mode described above, the presence of a radio obstacle, changes in transmitted/received signal intensity, and the like. The device setting or communication conditions may inhibit discovery of a target device even if discovery is repeated a number of times in device discovery.

As a user notification means for avoiding this situation, there has conventionally been proposed a function of always displaying a predetermined guidance message in advance (see, for example, CD-ROM "Microsoft® IntelliType Pro for Bluetooth^{™} 2.3 Keyboard Software", "Microsoft® IntelliPoint for Bluetooth^{™} 4.9. Mouse Software", ©&Ⓟ 1994-2002 Microsoft Corporation. All rights reserved. 0702 Part No. X09-00488 [printed on product]. X09-49335 [printed on envelope]). However, the technique of always displaying a message in advance complicates operation to the detriment of usability.

As described above, conventionally there has not been proposed a high-operability technique of setting a partner device in the general discoverable state when no partner device can be found from devices present within a predetermined wireless communication area by an electronic device having a function of discovering a partner device to which data is transmitted by wireless communication.

An electronic device according to the pre-characterizing part of claim 1 and a method as defined in the preamble of claim 8 are known from US 2002/0065868.

It is an object of the present invention to provide an electronic device which quickly sets a device capable of serving as a communication partner in the general discoverable state when no partner device can be discovered from devices present within a predetermined wireless communication area, and which simplifies a user interface to improve usability, and a device discovery method implemented by the electronic device.

According to the invention the above object is achieved by an electronic apparatus according to claim 1 and by a method according to claim 8. The dependent claims are directed to further advantageous aspects of the invention.

The invention can be more fully understood from the following detailed description when taken in conjunction with the accompanying drawings, in which:
FIG. 1 is a perspective view showing an example of the outer appearance of an electronic device according to a first embodiment of the present invention together with an example of a message displayed by the electronic device;
FIG. 2 is a conceptual view showing an example of a list of remote devices that is displayed by the electronic device according to the first embodiment of the present invention;
FIG. 3 is a block diagram showing an example of the internal configuration of the electronic device according to the first embodiment of the present invention;
FIG. 4 is a flowchart showing the discovery process routine of the electronic device according to the first embodiment of the present invention;
FIG. 5 is a schematic view showing an example of a discoverability mode setting window displayed on a device discovered by the electronic device according to the first embodiment of the present invention; and
FIG. 6 is a flowchart showing the discovery process routine of an electronic device according to a second embodiment of the present invention.

Preferred embodiments of the present invention will be described below with reference to the several views of the accompanying drawing.

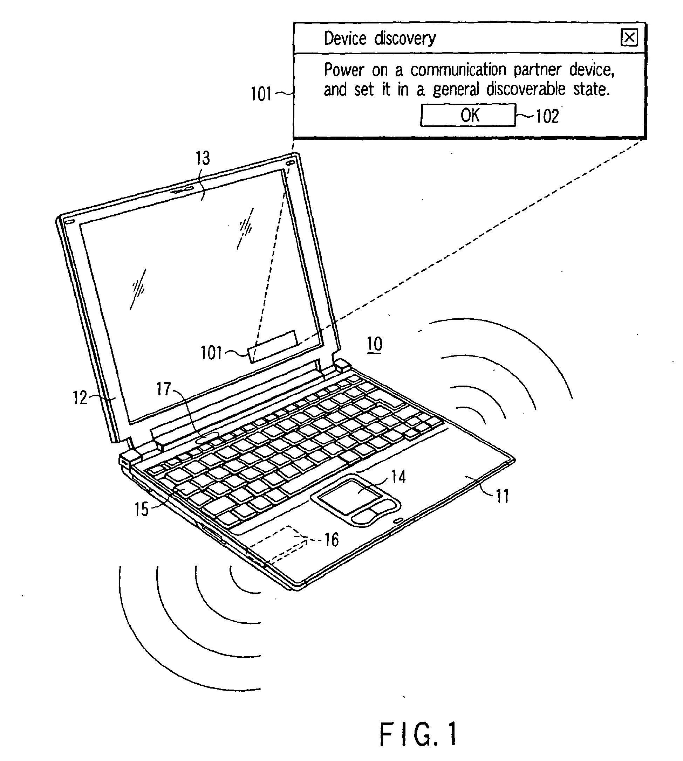

FIG. 1 is a perspective view showing the outer appearance of an example of an electronic device according to a first embodiment of the present invention. The figure illustrates, as an example of the electronic device, an information processing apparatus consisting of a notebook personal computer 10 having a wireless communication function.

The computer 10 comprises a computer main body 11 and display unit 12. The display unit 12 is pivotally attached to the computer main body 11 to be movable between an open position and a closed position. The display unit 12 incorporates a liquid-crystal display (LCD) 13 which forms a display panel.

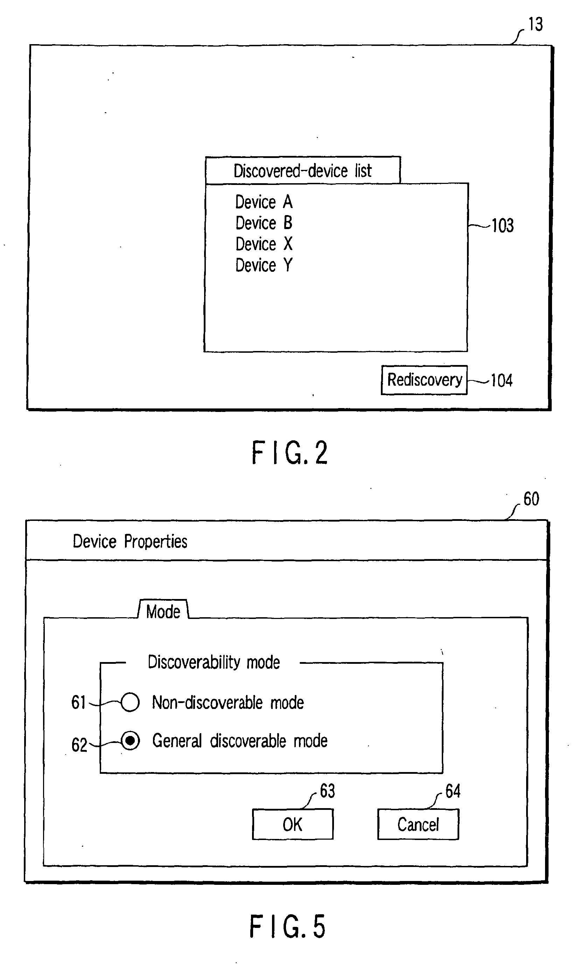

As shown in FIG. 2, the display screen of the LCD 13 displays a remote device list, which is a list of devices discovered by device discovery by means of a wireless inquiry upon activating the wireless communication function. The remote device list is a graphical user interface (GUI) which presents, to the user, devices wirelessly communicable with at the current place of use of the computer 10 so as to enable selection of any of the devices. The remote device list is used to prompt the user to select a communication partner. If no device that may serve as a communication partner is discovered in device discovery, a message 101 (see Figure 1) which prompts the user to perform an operation of setting a partner device in the general discoverable state is displayed. The process of outputting the message 101 will be described in detail later.

The computer main body 11 comprises a low-profile box-like housing, the upper surface of which is equipped with a pointing device 14, keyboard 15, and the like as input means operable by the user. The computer main body 11 incorporates a wireless communication device 16 for realizing a short-range wireless communication function, and a sound output unit 17 which outputs sound, an alarm, and the like.

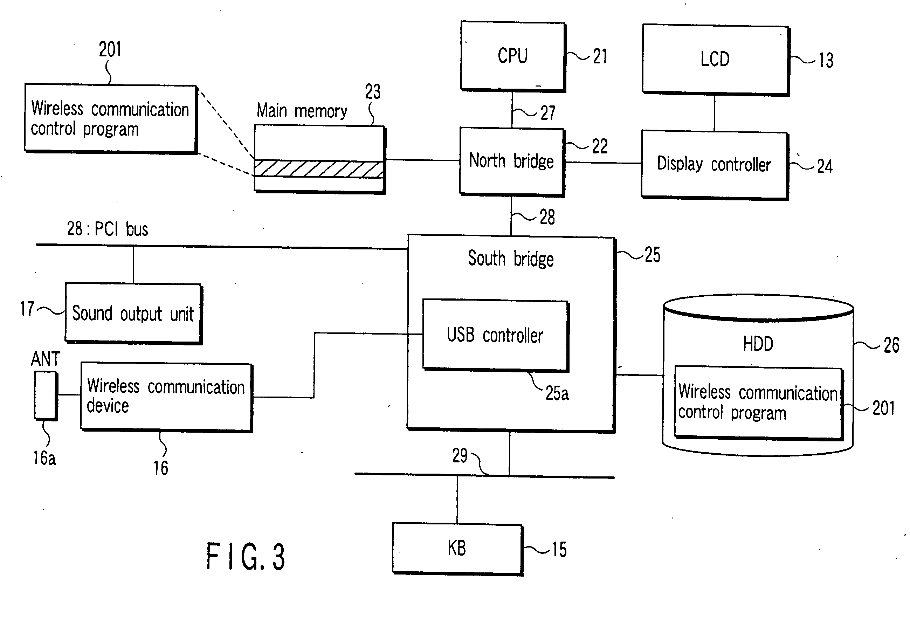

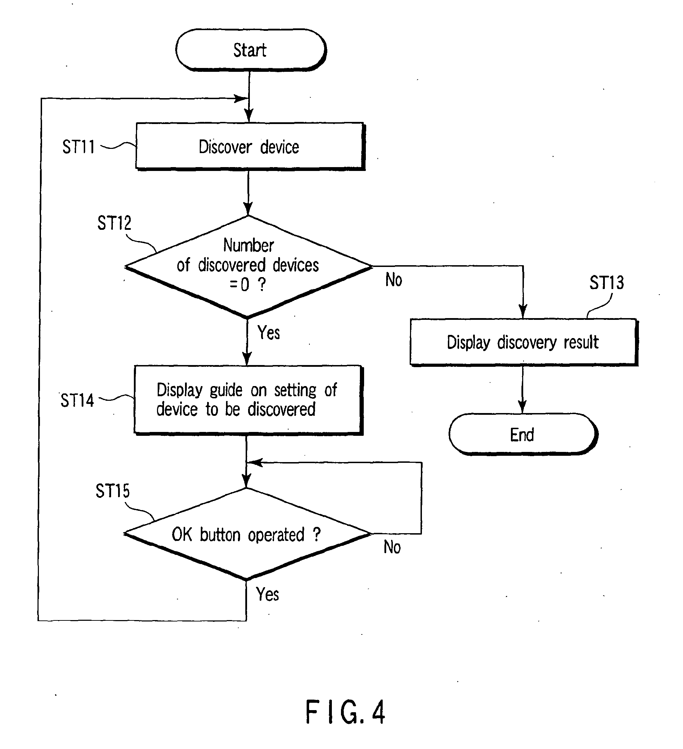

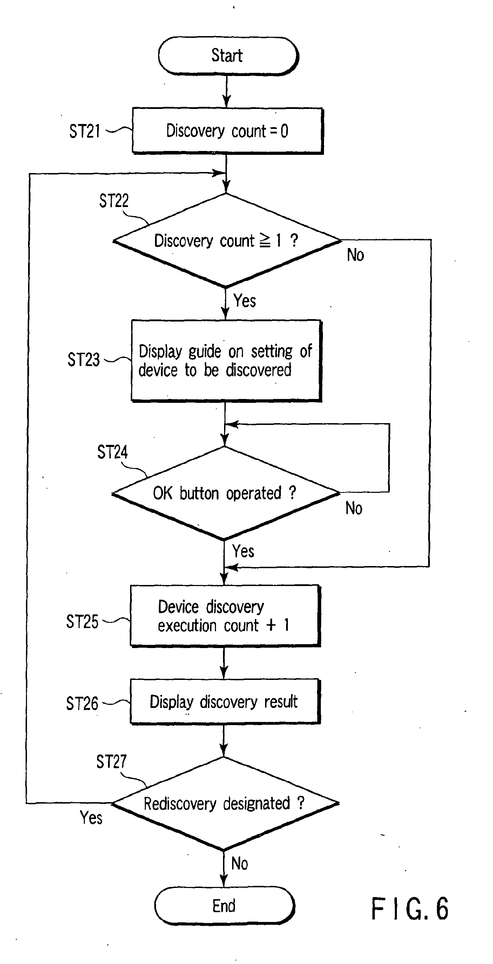

The wireless communication device 16 executes short-range wireless communication including a function of discovering devices present within a predetermined wireless communication area. The wireless communication device 16 is so designed as to execute wireless communication defined by a short-range wireless communication standard such as Bluetooth^{™}. Wireless communication operation of the wireless communication device 16 is controlled by a wireless communication control program (see reference numeral 201 in FIG. 3) running on the computer 10. The processing function of the wireless communication control program will be described with reference to the flowcharts shown in FIGS. 4 and 6. The sound output unit 17 outputs sound such as a voice message, an alarm, or music to a loudspeaker, headphones, or the like. For example, the sound output unit 17 can output a voice message which prompts an operation of setting a partner device in the general discoverable state, instead of or at the same time as the message 101 which is displayed on the display screen of the LCD 13. Alternatively, the sound output unit 17 can output an alarm sound which prompts an operation of setting a partner device in the general discoverable state.

FIG. 3 shows the system configuration of the computer 10. The computer 10 incorporates a CPU 21, north bridge 22, main memory 23, display controller 24, south bridge 25, and hard disk drive (HDD) 26, in addition to the LCD 13, keyboard 15, wireless communication device 16, and sound output unit 17 shown in FIG. 1.

The CPU 21 is a processor adopted to control the operation of the computer 10. The CPU 21 executes an operating system (OS) and various application programs which are loaded from the HDD 26 into the main memory 23. The wireless communication control program 201 is also loaded from the HDD 26 into the main memory 23, and executed by the CPU 21. The processing sequence of the wireless communication control program 201 at this time will be described below with reference to FIGS. 4 and 6.

The north bridge 22 is a bridge device which bidirectionally connects a local bus 27 and PCI bus 28 of the CPU 21. The display controller 24 controls the LCD 13 used as the display monitor of the computer 10. The south bridge 25 is a bridge device which bidirectionally connects the PCI bus and an ISA bus 29. The PCI bus 28 is connected to the sound output unit 17 and the like, whereas the ISA bus 29 is connected to the keyboard (KB) and the like.

The south bridge 25 incorporates a Universal Serial Bus (USB) controller 25a, which is connected to the wireless communication device 16. The wireless communication device 16 transmits/receives a radio signal via an antenna (ANT) 16a in accordance with a command input from the CPU 21 via the USB controller 25a.

The HDD 26 stores, as information associated with processes of the first embodiment, the wireless communication control program 201, data of the message 101 shown in FIG. 1, which is managed by the wireless communication control program 201 and which prompts the user to perform an operation of setting a partner device in the general discoverable state, template information of a discovered-device list 103 as shown in FIG. 2, voice message information, and the like.

FIG. 4 shows the processing sequence of the wireless communication control program 201 executed by the CPU 21 according to the first embodiment of the present invention. FIG. 6 shows the processing sequence according to the second embodiment of the present invention.

The processing flow according to the first embodiment of the present invention will be explained with reference to the flowchart shown in FIG. 4.

In the first embodiment, when no device serving as a partner device can be discovered in discovery of a partner device, the screen of the LCD 13 displays the message 101 which prompts setting of a device serving as a partner device in the general discoverable state.

In this process, device discovery is executed (step ST11), and if a device serving as a partner device is discovered as a result of discovery (NO in step ST12), a list of discovered devices is displayed on the LCD 13 as the discovered-device list 103 which allows selection of any of the each devices. After that, the discovery process ends (step ST13).

If no device capable of serving as a partner device is discovered as a result of discovery (YES in step ST12), the message 101 prompting the user to set a device serving as a partner device in the general discoverable state is displayed on the display screen of the LCD 13, as shown in FIG. 1 (step ST14). The message 101 includes an OK button 102 which is clicked by the user upon responding to the message. After the user responds to the message 101 by setting a device capable of serving as a partner device in the general discoverable state, he/she clicks the OK button 102 (YES in step ST15) to execute device discovery again (step ST11). In the process of the first embodiment, if no device capable of serving as a partner device is found (YES in step ST12), the LCD 13 displays the message 101 which prompts the user to set a device serving as a partner device in the general discoverable state (step ST14) . At the same time as display of the message 101, a voice message prompting the user to perform this setting can also be output from the sound output unit 17. Alternatively, instead of displaying the message 101, a voice message giving the same information or a predetermined chime sound can be output from the sound output unit 17 to prompt the user to perform this setting.

The discovery process can implement a user-friendly electronic device capable of simplifying the operation of the user interface to quickly and reliably discover a device capable of serving as a communication partner device. That is, when discovery of a device capable of serving as a communication partner device is carried out but no device can be found, the message 101 prompting the user to set a device capable of serving as a partner device in the general discoverable state is displayed. Device discovery is executed again after the user powers on the device capable of serving as a partner device or sets it in the general discoverable mode in accordance with the message. A target device capable of serving as a partner device can be quickly and reliably discovered.

According to the first embodiment, a target device can be found by the first discovery process with a very high degree of likelihood when a target device capable of serving as a partner device is not set in the continuous discoverable mode but the user recognizes this and sets the device in the general discoverable mode in advance, or when a target device capable of serving as a partner device is set in the continuous discoverable mode. In this case, the user need not respond to an unnecessary guidance message every time the message is displayed, thus simplifying user operation.

If no device can be discovered by the discovery process, a target device may not be set in, for example, the general discoverable state. In this situation, no device can be discovered and the non-discoverable state continues even if the user repeats the discovery process a plurality of times. However, according to the first embodiment, when no device capable of serving as a partner device can be discovered, the target device is determined to be not set in the general discoverable mode with a high degree of likelihood, and the message 101 is displayed. This can prevent a situation in which no target device can be discovered by several discovery processes. A target device capable of serving as a partner device can be discovered by a quick and reliable measure, and the communication environment can be quickly set along with discovery.

FIG. 5 is a schematic view showing an example of a discoverability mode setting window displayed on a device discovered by the electronic device according to the first embodiment of the present invention. When a device capable of serving as a communication device to be discovered is set in a mode in which the device cannot be externally discovered, a radio button 61 for the non-discoverable mode is set and an OK button 63 is clicked on a setting window 60 shown in FIG. 5. In response to this, the device is set in a processing state in which the device does not respond to external discovery. For example, when the user sets, in accordance with the message 101 shown in FIG. 1, a device capable of serving as a communication partner device in a mode in which the device can be externally discovered, a radio button 62 for the general discoverable mode is set and the OK button 63 is clicked in the setting window 60 shown in FIG. 5. In response to this, the device is set in a processing state in which it responds to external discovery. If a cancel button 64 is clicked, the device is not set in any processing state.

Discovery process operation of an electronic device according to the second embodiment of the present invention will be explained with reference to the flowchart shown in FIG. 6 and the remote device list window shown in FIG. 2. In the second embodiment, if the user cannot discover a target device when attempting to discover a device capable of serving as a communication partner device, i.e., if no target device is displayed in a discovered-device list 103, a message 101 which prompts setting of a target device in the general discoverable state is output.

In this process, a CPU 21 maintains in a main memory 23 a counter which counts the number of device discovery operations. The counter is set to zero (step ST21), and device discovery is executed (NO in steps ST22 and ST25). An LCD 13 displays the discovered-device list 103 which allows one of the devices to be selected from a list of discovered devices (step ST26). At this time, the counter is incremented from zero to 1 along with device discovery. FIG. 2 shows an example of the discovered-device list 103 displayed on the display screen of the LCD 13 in step ST26. The discovered-device list 103 displays the device names (or addresses) of devices discovered by the discovery process. Below the discovered-device list 103, the LCD 13 displays a rediscovery command button 104 which initiates rediscovery.

If the user, referring to the discovered-device list 103, recognizes discovered devices and a target device capable of serving as a partner device exists in the discovered-device list 103, he/she selects the target device from the discovered-device list 103, ending the discovery process (NO in step ST27).

If no target device exists in the discovered-device list 103, the user initiates rediscovery by clicking the rediscovery command button 104 (YES in step ST27), it is confirmed from the counter value that discovery has already been executed (YES in step ST22). The message 101 prompting the user to set a device capable of serving as a partner device in the general discoverable state is displayed on the display screen of the LCD 13 (step ST23).

After the user responds to the message 101 and sets a device capable of serving as a communication partner device in the general discoverable state, he/she clicks an OK button 102 (YES in step ST24) to execute device discovery again (step ST25). The discovered-device list 103 as a result of rediscovery is displayed on the display screen of the LCD 13 (step ST26). A target device is selected from the discovered-device list 103, ending the discovery process (NO in step ST27).

Also in the process of the second embodiment, in a similar way to the first embodiment, if no target device capable of serving as a communication partner is discovered, the message 101 prompting the user to set a partner device in the general discoverable state is displayed on the display screen of the LCD 13 (step ST23) . At this time, a voice message can also be output from a sound output unit 17 together with display of the message 101. Alternatively, instead of displaying the message 101, a voice message giving the same information or a predetermined chime sound can also be output from the sound unit 17.

The second embodiment of the present invention can obtain the same effects as those of the first embodiment when devices other than a target device are discovered but no target device is discovered. More specifically, when device discovery is performed to display the results in order to select a device, no device may be found or a plurality of devices may be found as discovery results. If no target device is discovered and displayed as a selection candidate, the operator can initiate rediscovery of a device. In the second embodiment of the present invention, when the user initiates rediscovery, the rediscovery command is determined to have been issued because no target device is discovered. As the cause, it is determined that the target device is not set in the general discoverable mode or, for example, is powered off. The message 101 which prompts setting of a target device in the general discoverable mode is displayed. The user responds to the message 101, and when setting the target device in a mode in which the device can be externally discovered, sets a general discoverable mode radio button 62 and clicks an OK button 63 in a setting window 60 shown in FIG. 5. Accordingly, the device is set in a state in which it can respond to external discovery. This can avoid a situation in which, when device discovery results can be obtained but no target device exists, no target device can be discovered even by repeating device discovery a plurality of times. A target device can be quickly and reliably discovered, and the communication environment can be quickly set along with discovery.

For example, the first and second embodiments can be combined. In the second embodiment, when no device capable of serving as a partner device is discovered by the first device discovery, the message 101 which prompts setting of a device capable of serving as a partner device in the general discoverable state can also be output. The screen arrangement of the user interface, the constituent components of the device, and the like in the first and second embodiments can also be appropriately changed in accordance with the device, function, and the like by which the present invention is practiced.

## Claims

1. An electronic device (10) adapted to discover, from devices present within a predetermined communication area, a partner device for transmitting data by wireless communication, said electronic device comprising:
a discovery means (16) adapted to discover the partner device by wireless communication;
**characterized by** further comprising
a first output means (12) for, when the partner device cannot be discovered by the discovery means, outputting a message (101) which prompts setting of the partner device in a state in which the partner device can be discovered by the discovery means.

2. A device according to claim 1, **characterized in that** the discovery means (16) is adapted to discover a partner device which can be set in the state in which the partner device can be discovered and a state in which the partner device cannot be discovered.

3. A device according to claim 2, **characterized in that** the discovery means (16) is adapted to perform the discovery once for the devices present within the predetermined communication area, and the first output means (12) is adapted to output the message which prompts setting of the partner device in the state in which the partner device can be discovered by the discovery means when the discovery means cannot discover the partner device by said one discovery.

4. A device according to claim 3, **characterized by** further comprising a rediscovery command means (104) for causing the discovery means (16) to perform the discovery again.

5. A device according to claim 1 **characterized by** further comprising:
a display means (13);
a display control means (24) for displaying, on the display means, information about a discovery result by the discovery means;
a rediscovery command means (104) for commanding the discovery means to perform the discovery again; and
a second output means (12) for, when the rediscovery command means (104) designates performance of the discovery again, outputting a message which prompts setting of the partner device in a state in which the partner device can be discovered by the discovery means (16).

6. A device according to claim 5, **characterized in that** the display means (13) is adapted to display a command input portion by which a command is input to cause the discovery means to perform the discovery again, and when the command is input to the command input portion, the rediscovery command means (104) is adapted to command the discovery means (16) to perform the discovery again.

7. A device according to claim 5, **characterized in that** the second output means (12) is adapted to output the message to the display means (13).

8. A method of discovering, from devices present within a predetermined communication area, a partner device to which data is transmitted by wireless communication, said method **characterized by** comprising:
discovering the partner device (ST11) by wireless communication; and
when the partner device cannot be discovered by discovery (ST12), outputting a message which prompts setting of the partner device in a state in which the partner device can be discovered (ST14).

## Patentansprüche

1. Elektronische Vorrichtung (10), die angepasst ist, um von Vorrichtungen, die innerhalb eines vorbestimmten Kommunikationsbereichs vorhanden sind, eine Partnervorrichtung zum Übertragen von Daten durch drahtlose Kommunikation zu entdecken, wobei die elektronische Vorrichtung umfasst:
ein Entdeckungsmittel (16), das angepasst ist, um die Partnervorrichtung durch drahtlose Kommunikation zu entdecken;
ferner **gekennzeichnet durch**
ein erstes Ausgabemittel (12), um, wenn die Partnervorrichtung nicht **durch** das Entdeckungsmittel entdeckt werden kann, eine Nachricht (101) auszugeben, die zum Einstellen der Partnervorrichtung in einen Zustand auffordert, in dem die Partnervorrichtung **durch** das Entdeckungsmittel entdeckt werden kann.

2. Vorrichtung gemäß Anspruch 1, **dadurch gekennzeichnet, dass** das Entdeckungsmittel (16) angepasst ist, um eine Partnervorrichtung zu entdecken, die in den Zustand, in dem die Partnervorrichtung entdeckt werden kann, und in einen Zustand, in dem die Partnervorrichtung nicht entdeckt werden kann, eingestellt werden kann.

3. Vorrichtung gemäß Anspruch 2, **dadurch gekennzeichnet, dass** das Entdeckungsmittel (16) angepasst ist, um die Entdeckung einmal für die Vorrichtungen durchzuführen, die innerhalb des vorbestimmten Kommunikationsbereichs vorhanden sind, und das erste Ausgabemittel (12) angepasst ist, um die Nachricht auszugeben, die zu dem Einstellen der Partnervorrichtung in den Zustand auffordert, in dem die Partnervorrichtung durch das Entdeckungsmittel entdeckt werden kann, wenn das Entdeckungsmittel die Partnervorrichtung nicht durch die eine Entdeckung entdecken kann.

4. Vorrichtung gemäß Anspruch 3, ferner **gekennzeichnet durch** ein Neuentdeckungsbefehlsmittel (104), um zu bewirken, dass das Entdeckungsmittel (16) die Entdeckung erneut durchführt.

5. Vorrichtung gemäß Anspruch 1, ferner **gekennzeichnet durch**:
ein Anzeigemittel (13);
ein Anzeigesteuermittel (24), um auf dem Anzeigemittel Information über ein Entdeckungsergebnis **durch** das Entdeckungsmittel anzuzeigen;
ein Neuentdeckungsbefehlsmittel (104), um dem Entdeckungsmittel zu befehlen, die Entdeckung erneut durchzuführen; und
ein zweites Ausgabemittel (12), um, wenn das Entdeckungsbefehlsmittel (104) die Durchführung der Entdeckung erneut bestimmt, eine Nachricht auszugeben, die zu dem Einstellen der Partnervorrichtung in einen Zustand auffordert, in dem die Partnervorrichtung **durch** das Entdeckungsmittel (16) entdeckt werden kann.

6. Vorrichtung gemäß Anspruch 5, **dadurch gekennzeichnet, dass** das Anzeigemittel (13) angepasst ist, um einen Befehlseingabeabschnitt anzuzeigen, durch den ein Befehl eingegeben wird, um zu bewirken, dass das Entdeckungsmittel die Entdeckung erneut durchführt, und wenn der Befehl in den Befehlseingabeabschnitt eingegeben ist, das Neuentdeckungsbefehlsmittel (104) angepasst ist, um dem Entdeckungsmittel (16) zu befehlen, die Entdeckung erneut durchzuführen.

7. Vorrichtung gemäß Anspruch 5, **dadurch gekennzeichnet, dass** das zweite Ausgabemittel (12) angepasst ist, um die Nachricht an das Anzeigemittel (13) auszugeben.

8. Verfahren zum Entdecken von innerhalb eines vorbestimmten Kommunikationsbereichs vorhandener Vorrichtungen einer Partnervorrichtung, zu der Daten durch drahtlose Kommunikation zu übertragen sind, wobei das Verfahren **gekennzeichnet ist durch**:
Entdecken der Partnervorrichtung (ST11) **durch** drahtlose Kommunikation; und
wenn die Partnervorrichtung nicht **durch** Entdeckung entdeckt werden kann (ST12), Ausgeben einer Nachricht, die zum Einstellen der Partnervorrichtung in einen Zustand auffordert, in dem die Partnervorrichtung entdeckt werden kann (ST14).

## Revendications

1. Dispositif électronique (10) adapté pour découvrir, à partir de dispositifs qui sont présents à l'intérieur d'une zone de communication prédéterminée, un dispositif de partenaire pour transmettre des données au moyen d'une communication sans fil, ledit dispositif électronique comprenant :
un moyen de découverte (16) adapté pour découvrir le dispositif de partenaire au moyen d'une communication sans fil,
**caractérisé en ce qu'**il comprend en outre :
un premier moyen de sortie (12) pour, lorsque le dispositif de partenaire ne peut pas être découvert par le moyen de découverte, émettre en sortie un message (101) qui demande l'établissement du dispositif de partenaire dans un état dans lequel le dispositif de partenaire peut être découvert par le moyen de découverte.

2. Dispositif selon la revendication 1, **caractérisé en ce que** le moyen de découverte (16) est adapté pour découvrir un dispositif de partenaire qui peut être établi dans l'état dans lequel le dispositif de partenaire peut être découvert et dans un état dans lequel le dispositif de partenaire ne peut pas être découvert.

3. Dispositif selon la revendication 2, **caractérisé en ce que** le moyen de découverte (16) est adapté pour réaliser la découverte une fois pour les dispositifs présents à l'intérieur de la zone de communication prédéterminée et le premier moyen de sortie (12) est adapté pour émettre en sortie le message qui demande l'établissement du dispositif de partenaire dans l'état dans lequel le dispositif de partenaire peut être découvert par le moyen de découverte lorsque le moyen de découverte ne peut pas découvrir le dispositif de partenaire au moyen de ladite une découverte.

4. Dispositif selon la revendication 3, **caractérisé en ce qu'**il comprend en outre un moyen de commande de redécouverte (104) pour faire en sorte que le moyen de découverte (16) réalise la découverte à nouveau.

5. Dispositif selon la revendication 1, **caractérisé en ce qu'**il comprend en outre :
un moyen d'affichage (13) ;
un moyen de commande d'affichage (24) pour afficher, sur le moyen d'affichage, une information concernant un résultat de découverte obtenu par le moyen de découverte ;
un moyen de commande de redécouverte (104) pour commander le moyen de découverte afin de réaliser la découverte à nouveau ; et
un second moyen de sortie (12) pour, lorsque le moyen de commande de redécouverte (104) désigne la réalisation de la découverte à nouveau, émettre en sortie un message qui demande l'établissement du dispositif de partenaire dans un état dans lequel le dispositif de partenaire peut être découvert par le moyen de découverte (16).

6. Dispositif selon la revendication 5, **caractérisé en ce que** le moyen d'affichage (13) est adapté pour afficher une partie d'entrée de commande au moyen de laquelle une commande est entrée pour faire en sorte que le moyen de découverte réalise la découverte à nouveau et lorsque la commande est entrée sur la partie d'entrée de commande, le moyen de commande de redécouverte (104) est adapté pour commander le moyen de découverte (16) pour réaliser la découverte à nouveau.

7. Dispositif selon la revendication 5, **caractérisé en ce que** le second moyen de sortie (12) est adapté pour émettre en sortie le message sur le moyen d'affichage (13).

8. Procédé de découverte, parmi des dispositifs présents à l'intérieur d'une zone de communication prédéterminée, d'un dispositif de partenaire sur lequel des données sont transmises au moyen d'une communication sans fil, ledit procédé étant **caractérisé en ce qu**'il comprend :
la découverte du dispositif de partenaire (ST11) au moyen d'une communication sans fil ; et
lorsque le dispositif de partenaire ne peut pas être découvert par la découverte (ST12), l'émission en sortie d'un message qui demande l'établissement du dispositif de partenaire dans un état dans lequel le dispositif de partenaire peut être découvert (ST14).
